# EUROPEAN PATENT APPLICATION

(11) **EP 2 717 417 A1**
(43) Date of publication of application: **09.04.2014**
(21) Application number: 12792511.3
(22) Date of filing: 25.05.2012
(51) Int. Cl.: H02J 7/00, H01M 10/44

(54) **BATTERY SYSTEM**

(30) Priority: 01.06.2011 JP 2011123030
(71) Applicant: Hitachi, Ltd., Tokyo 100-8280 (JP)
(72) Inventor: HONDA, Mitsutoshi, Tokyo 100-8280 (JP); IWAMURA, Masahiro, Tokyo 100-8280 (JP); FUTAMI, Motoo, Tokyo 100-8280 (JP); SHOJI, Hiroyuki, Tokyo 100-8280 (JP); INOUE, Takeshi, Tokyo 100-8280 (JP)
(74) Representative: MERH-IP Matias Erny Reichl Hoffmann
(86) International application number: PCT/JP2012/063514
(87) International publication number: WO 2012/165340

(57) **Abstract**

An electric storage system includes at least two types of electric storage cells. A first electric storage unit is configured from a first electric storage cell, and a second electric storage unit is configured from a second electric storage cell. The first and second electric storage units are electrically connected to each other through a current controlling circuit.

## Description

### Technical Field

The present invention relates to an electric storage system.

### Background Art

A technology disclosed in Patent Document 1 is available as a background art relating to the present technical field.

Patent Document 1 proposes an electric storage system which uses both two types of batteries including a capacity-oriented battery and an instantaneous type battery. The capacity-oriented battery here represents a battery which has a large capacity although the current which can be supplied to the battery is low. On the other hand, the instantaneous type battery represents a battery which has a small capacity although the current which can be supplied to the battery is high.

### Prior Art Literature

### Patent Document

Patent Document 1: JP-2007-122882-A

### Summary of the Invention

### Problem to be Solved by the Invention

Global warming is a serious problem to all mankind. In order to delay and halt the progress of global warning, promotion in energy efficiency mainly in the transport sector, utilization of new energy which does not involve emission of CO₂, and so forth are proceeding.

A representative example of promotion in energy efficiency in the transport sector is a hybrid system. The hybrid system is a system which recovers regenerative power upon deceleration from a motor into a storage battery and discharges the power upon acceleration to assist driving thereby to use the energy in high efficiency. Since such acceleration and deceleration involve a sudden variation in the electric current, a high-output power characteristic in a short period of time is demanded. Further, as the energy density of the battery increases, the restriction to the installation area decreases, which leads to reduction in size and weight of the vehicle body. Therefore, the battery is demanded to have a high instantaneous output power density and a high capacity density.

Meanwhile, a storage battery is being spread widely in the new energy sector too. This is because since the generated power output of wind-power generation and solar power generation is not stable it is necessary to solve this problem. In particular, it is necessary to provide an electric storage system to the power generation facilities to smoothen the power variation to such level that the power variation does not have a negative influence on the power system and increase the interconnection capacity to the system. Further, if the capacity density of the battery increases the restriction in installation area decrease, making it easier to place the battery inside the power generation facilities.

From the foregoing, in promotion of new energy in the transport sector also in utilization of new energy from wind-power generation , solar power generation and so forth, an electric storage system which can output high output power in a short period of time and has a high capacity density.

In order to obtain an electric storage system which can output high output power in a short period of time and has a high capacity density, a system may be constructed from a capacity-oriented battery and an instantaneous type battery as in the electric storage system disclosed, for example, in Patent document 1.

However, the capacity-oriented battery undergoes sudden degradation if current higher than a prescribed level flows thereto. From such a situation as just described, where the capacity-oriented battery is used, for example, it is necessary to provide a switch in a charge and discharge path of the capacity-oriented battery so that current higher than a prescribed level may not flow to the capacity-oriented battery. Such a method as just described uniquely limits the use of the capacity-oriented battery. Therefore, it is considered that the characteristic of the high capacity density of the capacity-oriented battery is not fully utilized and the electric storage system approaches a situation wherein it is composed only of the instantaneous type battery. As a result, it is considered that the number of instantaneous type batteries must be increased, leading to the electric storage system proportionately growing in size

### Means for Solving the Problem

It is a representative problem to be solved by a representative invention of the present application to achieve elongation of the life of an electric storage system which can output high output power in a short period of time and is high in capacity density.

When the electric storage system described above is provided, the system could be downsized preferably.

According to a first mode of the present invention, provided is an electric storage system including at least two types of electric storage cells, wherein a first electric storage unit configured from first electric storage cell and a second electric storage unit configured from a second electric storage cell are electrically connected to each other through a current controlling circuit.

According to a second mode of the present invention, provided is an electric storage system including at least three types of electric storage cells, wherein:
a first electric storage unit comprised from a first electric storage cell and a second electric storage unit comprised from a second electric storage cell are electrically connected to each other through a first current controlling circuit; and
the second electric storage unit and a third electric storage unit comprised from a third electric storage cell are electrically connected to each other through a second current controlling circuit.

According to a third mode of the present invention, in the first or second mode of the electric storage system, the current controlling circuit preferably consists of a voltage adjustment circuit which includes one of a step-up chopper, a step-down chopper, a step-up/down chopper, or a combination of a step-up chopper and a step-down chopper.

According to a fourth mode of the present invention, in the first or second mode of the electric storage system, the controlling circuit preferably consists of an impedance adjustment circuit.

According to a fifth mode of the present invention, in the fourth mode of the electric storage system, the impedance adjustment circuit should be a coil preferably.

According to a sixth mode of the present invention, provided is an electric storage system including:
a first storage unit comprised from a first electric storage cell;
a second storage unit comprised from a second electric storage cell which is different in type from the first electric storage cell; and
a current controlling circuit provided between the first storage unit and the second storage unit for electrically connecting the first storage unit and the second storage unit to each other to control input/output current amounts to and from the first storage unit and the second storage unit.

The current controlling circuit includes two switch circuits which control the ratio of the input/output current amounts to and from the first and the second storage unit by controlling on and off of the switch circuits.

### Advantage of the Invention

With the representative inventions of the present application, since current to flow to the capacity-oriented battery can be suppressed, elongation of the life of the battery system can be achieved.

### Brief Description of the Drawings

FIG. 1 is a circuit diagram showing a configuration of a battery system according to a first embodiment of the present invention.
FIG. 2 is a waveform diagram illustrating operation of a voltage adjustment circuit (switch) of FIG. 1.
FIG. 3 is a waveform diagram illustrating a temporal variation of current flowing to two types of batteries of FIG. 2.
FIG. 4 is a waveform diagram illustrating a temporal variation of current before and after control (DUTY ratio control of the switch) of the voltage adjustment circuit of FIG. 1.
FIG. 5 is a circuit diagram showing a configuration of a battery system wherein a capacitor is provided additionally to the system of FIG. 1.
FIG. 6 is a waveform diagram illustrating a temporal variation of current before and after the additional provision of the capacitor of FIG. 5.
FIG. 7 is a circuit diagram showing a configuration of a battery system in which a voltage adjustment circuit different from the voltage adjustment circuit of FIG. 1 is incorporated.
FIG. 8 is a pattern diagram illustrating a charge and discharge pattern used for life evaluation of the battery system.
FIG. 9 is a relationship diagram illustrating a relationship of a capacity retention ratio of a capacity-oriented battery to a cycle number according to a result of the life evaluation of the battery system.
FIG. 10 is a circuit diagram showing a configuration of a battery system in which a voltage adjustment circuit different from the voltage adjustment circuit of FIG. 1 is incorporated.
FIG. 11 is a circuit diagram showing a configuration of a battery system in which a voltage adjustment circuit different from the voltage adjustment circuit of FIG. 1 is incorporated.
FIG. 12 is a circuit diagram showing a configuration of a battery system in which a voltage adjustment circuit different from the voltage adjustment circuit of FIG. 1 is incorporated.
FIG. 13 is a waveform diagram illustrating operation of the voltage adjustment circuit (switch) of FIG. 10.
FIG. 14 is a waveform diagram illustrating operation of the voltage adjustment circuit (switch) of FIG. 11.
FIG. 15 is a waveform diagram illustrating operation of the voltage adjustment circuit (switch) of FIG. 12.
FIG. 16 is a circuit diagram showing a configuration of a battery system according to a second embodiment of the present invention.
FIG. 17 is a waveform diagram illustrating a temporal variation of current before and after introduction of an impedance adjustment circuit of FIG. 16.
FIG. 18 is a circuit diagram showing a configuration of a battery system according to a third embodiment of the present invention.
FIG. 19 is a block diagram showing a configuration of a hybrid vehicle system in which the battery system of one of the first to third embodiments is incorporated according to a fourth embodiment of the present invention.

### Mode for Carrying out the Invention

In the following, embodiments of the present invention are described with reference to the drawings.

### -Embodiment 1-

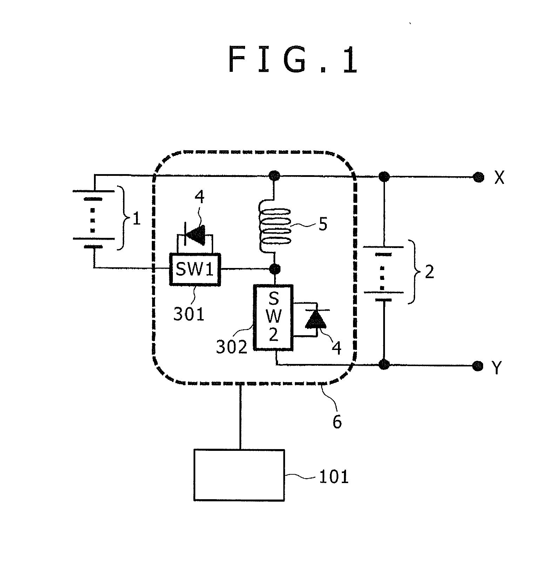

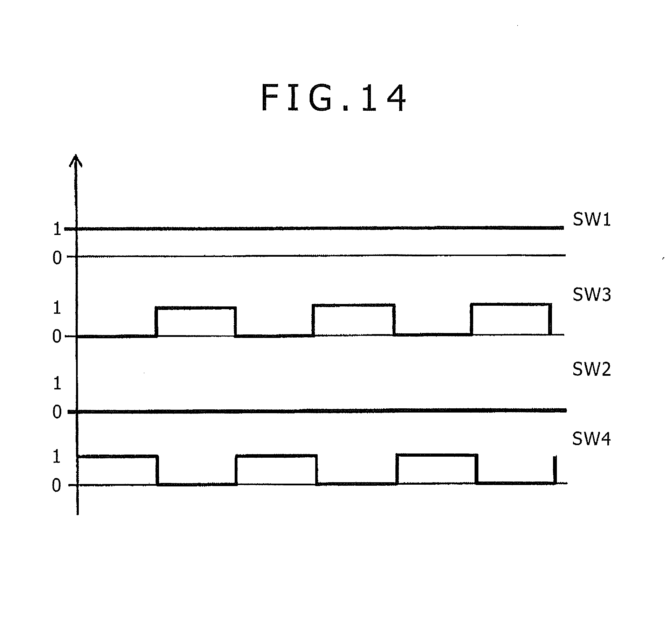

A first embodiment of the present invention is described with reference to FIGS. 1 to 15.

First, a configuration of a battery system is described with reference to FIG. 1.

FIG. 1 shows a general configuration of the battery system of the present embodiment.

The battery system of the present embodiment incorporates both of an instantaneous type battery 2 and a capacity-oriented battery 1. The batteries are electrically connected in parallel through a voltage adjustment circuit 6. Reference numeral 1 here corresponds to a capacity-oriented battery, 2 to an instantaneous type battery, 301 to switch 1, 302 to switch 2, 4 to a diode, and 6 to a voltage controlling circuit.

It is to be noted that the battery system includes a controller 101 controlling the switches 301 and 302.

Further, the battery system of the present embodiment is described taking a case in which a step-up/down chopper is used as the voltage adjustment circuit 6 as an example.

The voltage adjustment circuit 6 is provided between two battery groups. The first group is constructed by connecting the capacity-oriented batteries 1 electrically connected in series. The second group is electrically connected in parallel to the former battery group and constructed by electrically connecting the instantaneous type batteries 2 in series. The switches 301 and 302 are electrically connected in series in a route. Along the route, the negative electrode side of the battery group constructed by electrically connecting the capacity-oriented batteries 1 in series and the negative electrode side of the battery group constructed by electrically connecting the instantaneous type batteries 2 in series are electrically connected to each other. A coil 5 is electrically connected between a node which is located between the switches 301 and 302, and another route. Along the route, the negative electrode side of the battery group constructed by electrically connecting the capacity-oriented batteries 1 in series and the negative electrode side of the battery group constructed by electrically connecting the instantaneous type batteries 2 in series are electrically connected to each other.

In the present embodiment, a MOSFET (Metal-Oxide-Semiconductor Field-Effect Transistor) is used for the switches 301 and 302. A MOSFET usually has a parasitic diode built therein, accordingly, the diode 4 shown in FIG. 1 can be regarded as a parasitic diode of the MOSFET. On the other hand, where an element does not have a parasitic diode like an IGBT, there is no necessity to separately provide a diode.

In the present embodiment, an assembled battery constructed by electrically connecting a plurality of lithium-ion secondary batteries in series is adopted for the capacity-oriented batteries 1 and the instantaneous type batteries 2. In particular, a lithium-ion secondary battery wherein lithium cobalt oxide is used for the positive electrode is adopted for the capacity-oriented batteries. Meanwhile, a lithium ion secondary battery wherein olivine lithium iron is used for the positive electrode is adopted for the instantaneous type batteries. As the combination of batteries, there is no limitation to the lithium-ion secondary batteries wherein lithium cobalt oxide is used for the positive electrode only if the batteries are not capable of receiving a high current although they have a high capacity. In particular, a nickel-hydrogen battery or a lead battery may be adopted only if it satisfies the conditions. Further, only if batteries have a low capacity density although they are capable of receiving a high current, the batteries are not limited to lithium-ion secondary batteries wherein olivine lithium iron is used for the positive electrode. Each of the battery groups constructed using a plurality of capacity-oriented batteries or instantaneous type batteries is electrically connected to a plurality of batteries of each same type in series. The battery groups are constructed such that their voltage is approximately 300 V when the state of charge (SOC) thereof is 50 %.

Here are cases in which a load is electrically connected to an X and Y point of the battery system configured the way above to carry out charging and discharging.

The first case is when current is comparatively low.

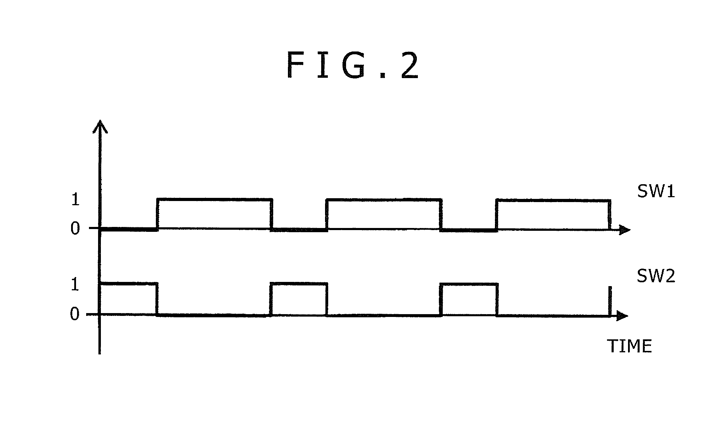

The capacity of the battery group constructed by electrically connecting the capacity-oriented batteries 1 in series is represented by A. The capacity of the battery group constructed by electrically connecting the instantaneous type batteries 2 in series is represented by B. Operation of the switches 301 and 302 is illustrated in FIG. 2. Referring to FIG. 2, reference numeral 1 and 2 denote a state of switched-on and switched-off, respectively. When the switch 301 is on the switch 302 is controlled to the "off" state, and when the switch 301 is off the switch 302 is controlled to the "on" state.

Suppose the DUTY ratio of the switches is defined as a ratio at which the switch 301 is on. Then the DUTY ratio corresponds to the capacity ratio {B/(A + B)} between the capacity A and the capacity B. By controlling on/off of the switches 301 and 302 in this manner, the ratio between the currents flowing to the capacity-oriented batteries 1 and the instantaneous type batteries 2 can be adjusted.

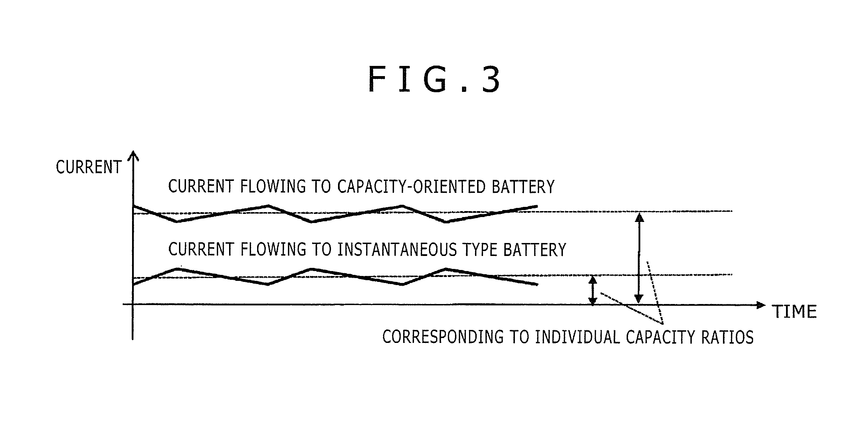

FIG. 3 illustrates variations of a current flowing to the battery group constructed by electrically connecting the capacity-oriented batteries 1 in series and the battery group constructed by electrically connecting the instantaneous type batteries 2 in series.

As illustrated in FIG. 3, a current flows equally in accordance with the capacity ratio {B/(A + B)} between the capacities A and B which can be used equally as a result.

The second case is when a current exceeding the maximum value the capacity-oriented batteries 1 are capable of receiving flows thereto.

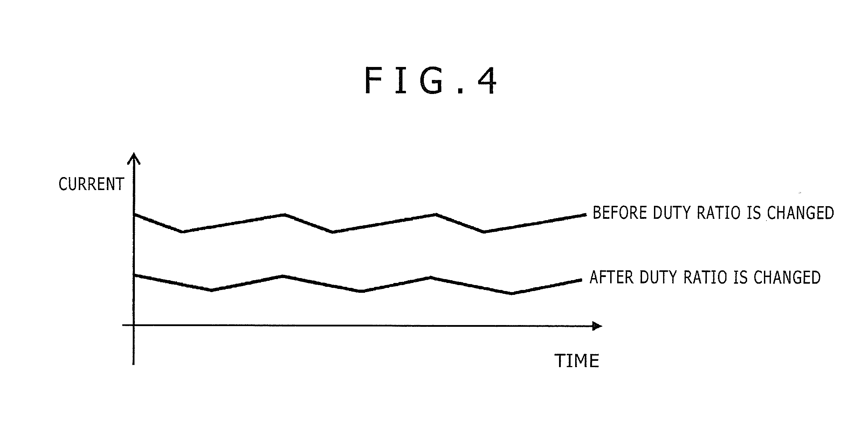

FIG. 4 illustrates current variations before and after the increase of the DUTY ratio of the switches.

As illustrated in FIG. 4, if the DUTY ratio of the switches increases, then the current flowing to the battery group constructed by electrically connecting the capacity-oriented battery 1 in series can be lowered.

In this manner, in the present embodiment, the voltage adjustment circuit 6 is provided between the battery group constructed by electrically connecting the capacity-oriented batteries 1 in series and the battery group constructed by electrically connecting the instantaneous type batteries 2 in series. The DUTY ratio of the switches which configures the voltage adjustment circuit 6 is changed. Consequently, a current higher than the prescribed value does not flow to the capacity-oriented batteries 1 in any case. In other words, the voltage adjustment circuit 6 functions as a current controlling circuit to prevent a current higher than the prescribed value from flowing to the capacity-oriented batteries 1. Besides, if such a circuit as just described is used, the battery group constructed by electrically connecting the capacity-oriented batteries 1 in series is not electrically cut off. Therefore, the utilization of the capacity-oriented battery 1 does not drop. Accordingly, there will be no necessity to increase the number of instantaneous type batteries 2 to expand the capacity, and thereby the system's growth in size by increasing the number of instantaneous type batteries 2 can be avoided.

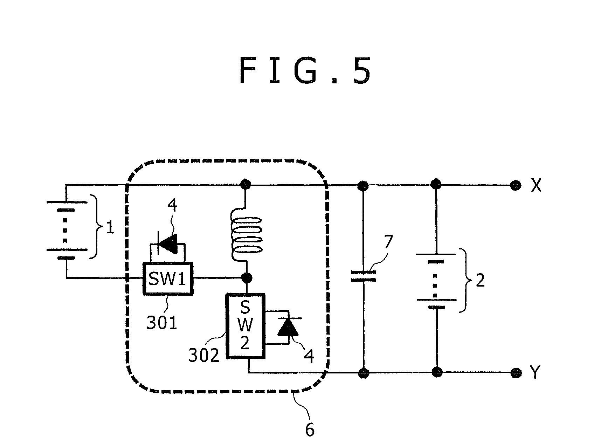

Incidentally, electric current exhibits a zigzag variation as illustrated in FIG. 2. Therefore, in the present embodiment, a capacitor 7 is added to the circuit shown in FIG. 1. In particular, as shown in FIG. 5, the capacitor 7 is additionally provided between two routes. The first route electrically connects the positive electrode side of the battery group constructed by electrically connecting the capacity-oriented battery 1 in series and the positive electrode side of the battery group constructed by electrically connecting the instantaneous type batteries 2 in series. The second route electrically connects the negative electrode side of the battery group constructed by electrically connecting the capacity-oriented batteries 1 in series and the negative electrode side of the battery group constructed by electrically connecting the instantaneous type batteries 2 in series. Besides, the capacitor 7 is provided on the battery group side, constructed by electrically connecting the instantaneous type batteries 2 in series, of the voltage adjustment circuit 6.

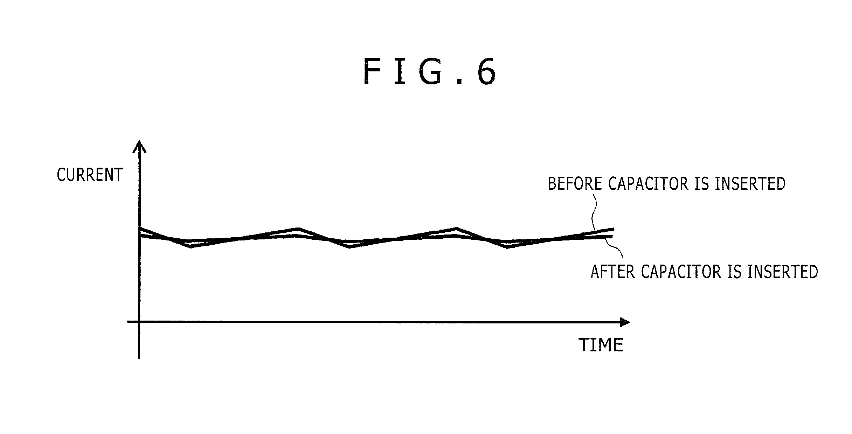

FIG 6 illustrates variations of current flowing to the capacity-oriented batteries before and after the additional provision of the capacitor 7 thereto.

As illustrated in FIG. 6, it can be found that the degree of zigzag of the waveform illustrating a variation of the current decreases as a result of the additional provision of the capacitor 7.

It is to be noted that while the step-up/down chopper shown in FIG. 1 is adopted as the voltage adjustment circuit in the present embodiment, a step-up/down chopper of a different configuration may be adopted.

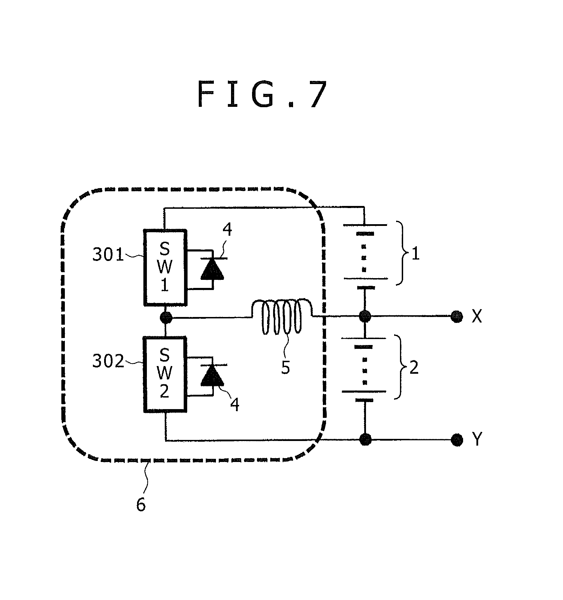

FIG. 7 shows a circuit which uses a step-up/down chopper different from that of FIG. 1. Also in this case, when the electric current is low it can flow uniformly, but when the electric current is high the current can be supplied to the instantaneous type batteries.

In the example shown in FIG. 7, the battery group constructed by electrically connecting the capacity-oriented batteries 1 in series and the battery group constructed by electrically connecting the instantaneous type batteries 2 in series are connected in series. A load is electrically connected between the positive and negative electrodes of the battery group constructed by electrically connecting the instantaneous type batteries 2 in series. Moreover, the switches 301 and 302 are electrically connected in series between the positive electrode side of the battery group constructed by electrically connecting the capacity-oriented batteries 1 in series and the negative electrode side of the battery group constructed by electrically connecting the instantaneous type batteries 2 in series. Furthermore, the coil 5 is connected between an electrical connection point between the switches 301 and 302 and another electrical connection point. The latter electrical connection point is located between the negative electrode side of the battery group constructed by electrically connecting the capacity-oriented batteries 1 in series and the positive electrode side of the battery group constructed by electrically connecting the instantaneous type batteries 2 in series.

The results described above reveal that the battery system can charge and discharge in accordance with the capacity ratio when the electric current is comparatively low by varying the DUTY ratio of the switches of the voltage controlling circuit. However, when the electric current is high, the current can flow to the instantaneous type battery.

Based on the findings described above, life of the battery system is evaluated.

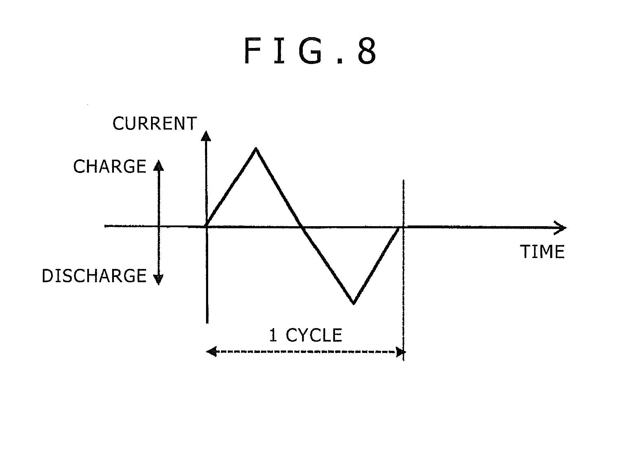

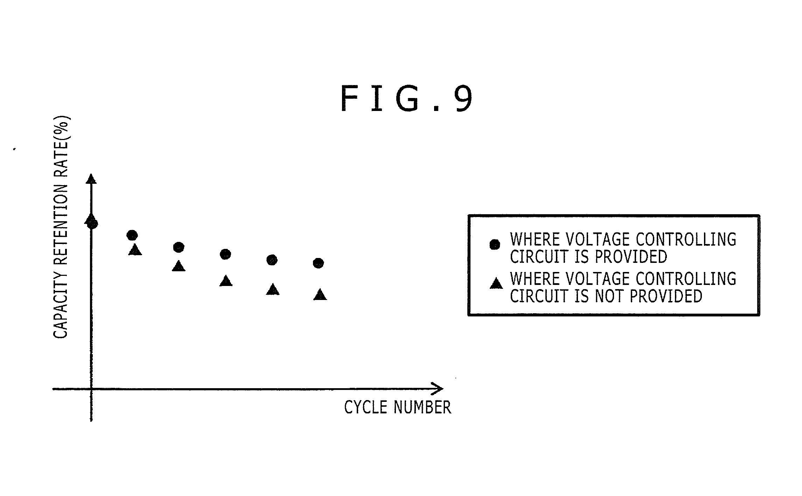

A charge and discharge pattern then is illustrated in FIG. 8, and a variation of the capacity retention rate of the capacity-oriented battery 1 then is illustrated in FIG. 9.

A case in which the capacity-oriented battery 1 charged and discharged current, exceeding the maximum value of current the capacity-oriented battery 1 is capable of receiving for a short period of time is determined as one cycle.

The capacity retention rate here is a rate of the capacity after the test for one cycle to the capacity at an initial stage. The decrease of the rate indicates the progress of degradation, showing that the voltage adjustment circuit 6 can suppress degradation of the capacity-oriented batteries.

From the result described above, elongation of the life of the capacity-oriented battery 1 can be expected by providing the voltage adjustment circuit 6 and changing over the current by the switches.

A step-up/down chopper is used as an example of the voltage adjustment circuit 6 above, though, a step-up chopper, a step-down chopper, or both of them may be used for the voltage adjustment circuit 6 as well.

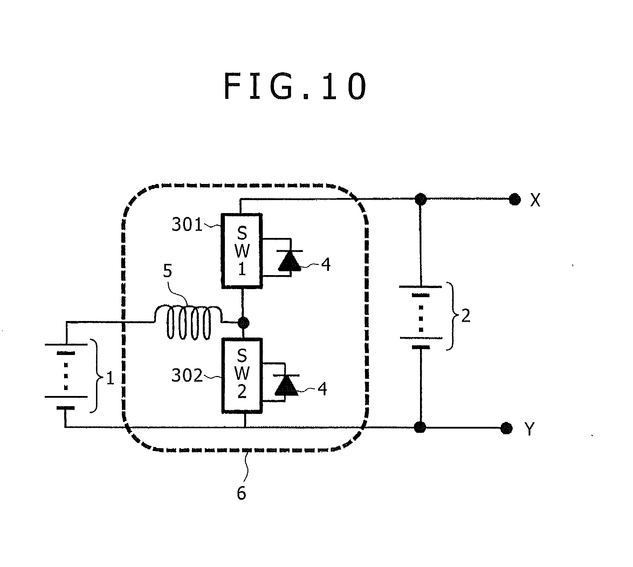

FIG. 10 shows a circuit wherein a step-up chopper is used as the voltage adjustment circuit 6.

Since a step-up chopper is adopted as the voltage adjustment circuit 6 in the present embodiment, the numbers of the battery groups are adjusted such that the voltage of the battery group constructed by electrically connecting the capacity-oriented batteries 1 in series is lower than the voltage of the battery group constructed by electrically connecting the instantaneous type batteries 2 in series.

As shown in FIG. 10, the switch 301 and the coil 5 are electrically connected in series between the positive electrode side of the battery group constructed by electrically connecting the capacity-oriented batteries 1 in series and the positive electrode side of the battery group constructed by electrically connecting the instantaneous type batteries 2 in series. The switch 302 is electrically connected between a node which is located between the switch 301 and the coil 5, and a route along which the battery groups are connected to each other. In particular, the route electrically connects the negative electrode side of the battery group constructed by electrically connecting the capacity-oriented batteries 1 in series and the negative electrode side of the battery group constructed by electrically connecting the instantaneous type batteries 2 in series to each other.

Similarly as upon use of a step-up/down chopper, it is found that, if the battery system is charged and discharged, the capacities of both electrode groups can be used equally when the current is comparatively low. However, when current higher than the level which the capacity-oriented batteries are capable of receiving is supplied, the current flowing to the capacity-oriented batteries can be reduced.

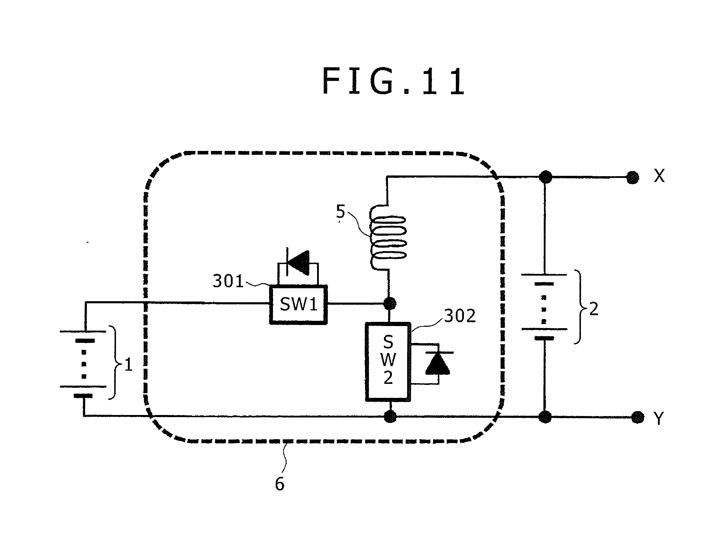

FIG. 11 shows a circuit wherein a step-down chopper is used as the voltage adjustment circuit 6.

In the present embodiment, the numbers of battery groups are adjusted such that the voltage of the battery group constructed by electrically connecting the capacity-oriented batteries 1 in series is higher than the voltage of the battery group constructed by electrically connecting the instantaneous type batteries 2 in series.

In the present embodiment, the location of the switch 301 and coil 5 of the circuit in FIG. 11 is interchanged from that in FIG. 10. The direction of the diode 4 of the switch 301 is reversed too.

Similarly as in the case in which a step-up/down chopper is used, it is found that if the battery system charges and discharges, the capacities of both battery groups can be used equally when the current is comparatively low. However, when current higher than a level of current which the capacity-oriented batteries are capable of receiving is supplied, the current flowing to the capacity-oriented batteries can be reduced.

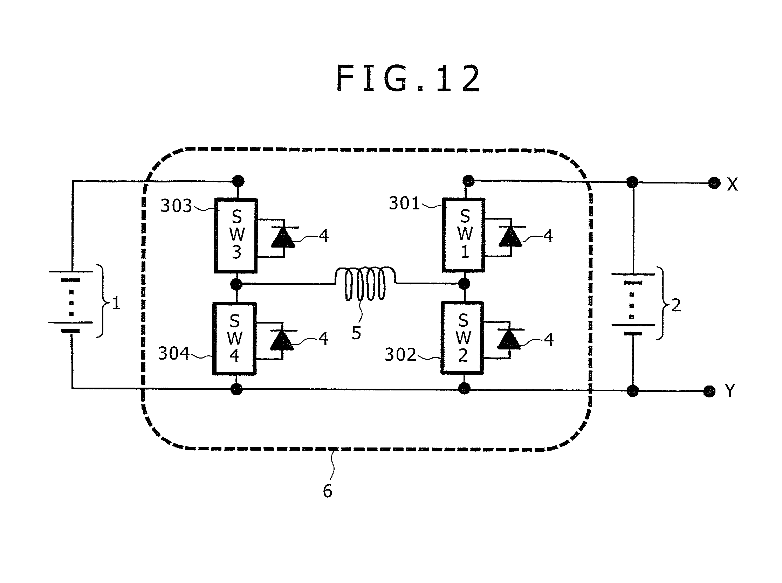

FIG. 12 shows a circuit in which both of a step-up chopper and a step-down chopper are used as the voltage adjustment circuit 6. Referring to FIG. 12, reference numeral 301 corresponds to switch 1, 302 to switch 2, 303 to switch 3, and 304 to switch 4.

As shown in FIG. 12, the negative electrode side of the battery group constructed by electrically connecting the capacity-oriented batteries 1 in series and the negative electrode side of the battery group constructed by electrically connecting the instantaneous type batteries 2 in series are electrically connected to each other. The switches 303 and 304 are electrically connected in series between the positive electrode side and the negative electrode side of the battery group constructed by electrically connecting the capacity-oriented batteries 1 in series. The switches 301 and 302 are electrically connected in series between the positive electrode side and the negative electrode side of the battery group constructed by electrically connecting the instantaneous type batteries 2 in series. The coil 5 is connected to the two nodes: the one between the switches 301 and 302, and the other between the switches 303 and 304.

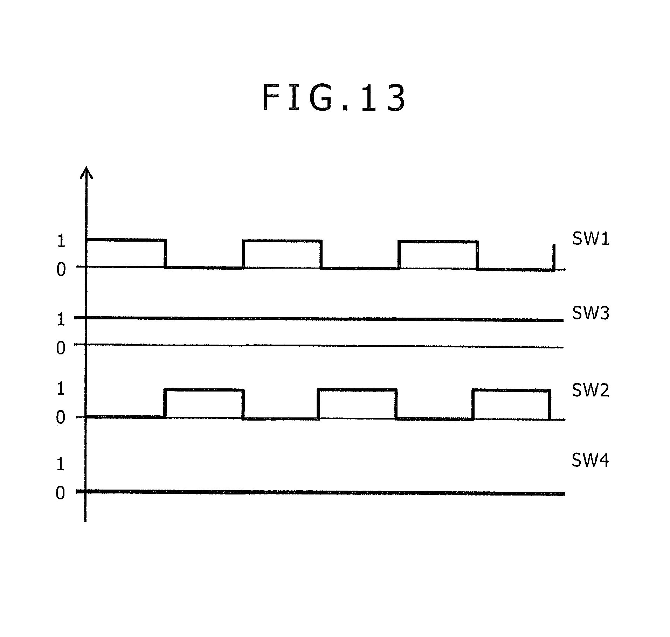

First, a case is studied in which the circuit is set such that the voltage of the battery group constructed by electrically connecting the capacity-oriented batteries 1 in series is always lower than the voltage of the battery group constructed by electrically connecting the instantaneous type batteries 2 in series as in the case of the step-up chopper. Movements of the switches thereupon are illustrated in FIG. 13. In this case, to normally keep the switch 303 on and the 304 off, and then to change over only the switches 301 and 302 is equivalent to that the voltage adjustment circuit 6 operates as a step-up chopper.

Another case is studied in which the circuit is set such that the voltage of the battery group constructed by electrically connecting the capacity-oriented batteries 1 in series is always higher than the voltage of the battery group constructed by electrically connecting the instantaneous type batteries 2 in series as in the case of the step-up chopper. Movements of the switches thereupon are illustrated in FIG. 13. In this case, to normally keep the switch 301 on and the 302 off, and then to change over only the switches 303 and 304 is equivalent to that the voltage adjustment circuit 6 operates as a step-down chopper.

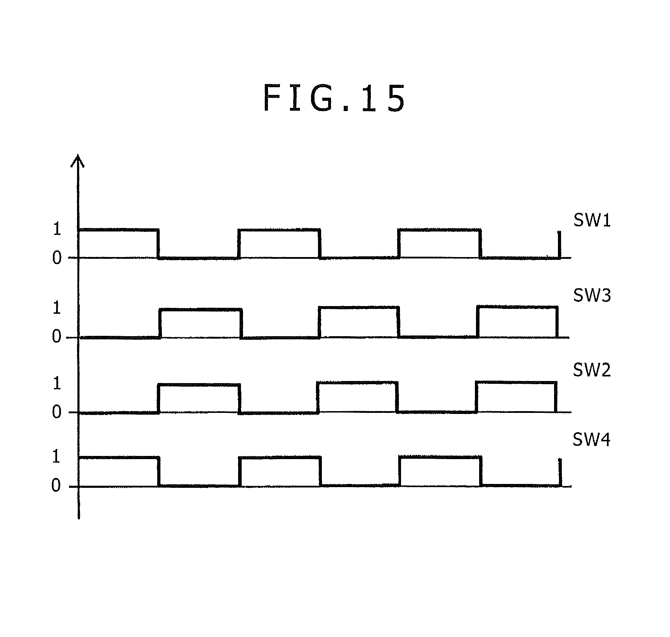

Further, the switches 301 to 304 are controlled such that the switches 301 and 304 do the same movements and the switches 302 and 303 do the opposite movements. This changeover method is illustrated in FIG. 15. If this method is adopted, the current flowing to the battery group constructed by electrically connecting the capacity-oriented batteries 1 in series and the current flowing to the battery group constructed by electrically connecting the instantaneous type batteries 2 in series can be controlled by the voltage adjustment circuit 6. The control in this instance is carried out such that the voltage of the battery group constructed by electrically connecting the capacity-oriented batteries 1 in series is independent of the voltage of the battery group constructed by electrically connecting the instantaneous type batteries 2 in series.

### -Embodiment 2-

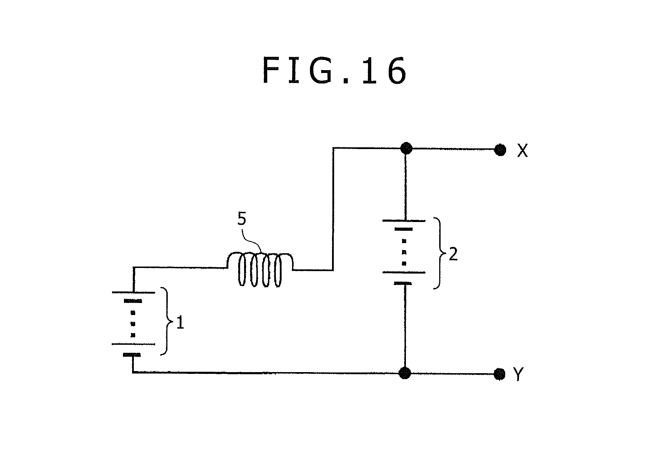

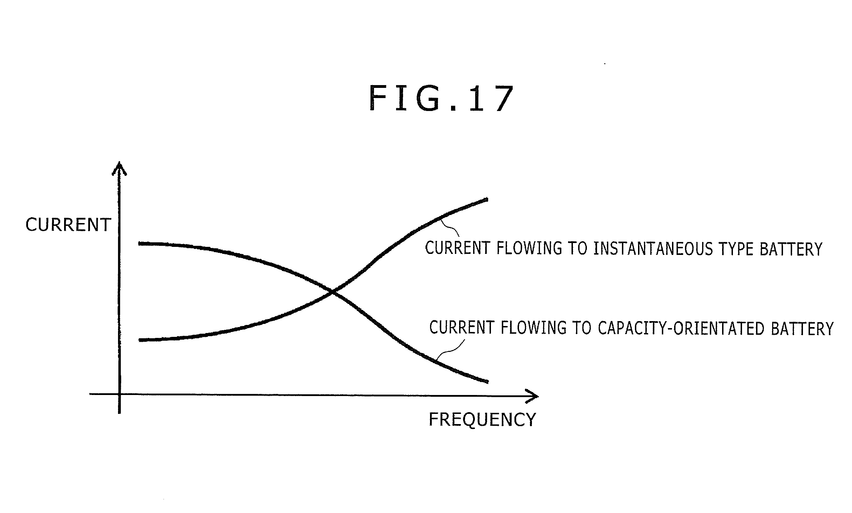

A second embodiment of the present invention is described with reference to FIGS. 16 and 17.

In the present embodiment, a coil 5 which is an impedance adjustment circuit is electrically connected in series in a route between capacity-oriented batteries 1 and instantaneous type batteries 2. More particularly, the route electrically connects the positive electrode side of a battery group constructed by electrically connecting the capacity-oriented batteries 1 in series and the positive electrode side of a battery group constructed by electrically connecting the instantaneous type batteries 2 in series. The impedance adjustment circuit functions as a current controlling circuit for inhibiting current higher than a prescribed value from flowing to the capacity-oriented batteries 1.

FIG. 17 illustrates variations of the current flowing to the battery group constructed by electrically connecting the capacity-oriented batteries 1 in series and the current flowing to the battery group constructed by electrically connecting the instantaneous type batteries 2 in series before and after the impedance adjustment circuit is introduced.

In FIG. 17, the axis of ordinate indicates the current flowing to the battery group constructed by electrically connecting the capacity-oriented batteries 1 in series and the battery group constructed by electrically connecting the instantaneous type batteries 2 in series. The axis of abscissa indicates the frequency of the current. FIG. 17 thus illustrates a relationship between the current and the frequency.

As illustrated in FIG. 17, the current of the battery group constructed by electrically connecting the capacity-oriented batteries 1 in series decreases while the current of the battery group constructed by electrically connecting the instantaneous type batteries 2 in series increases as the frequency of the current increases. This result shows that an instantaneous variation of current is absorbed principally by the battery group constructed by electrically connecting the instantaneous type batteries 2 in series.

From the foregoing results, the current turns out to be suppressed from instantaneously flowing to the battery group constructed by electrically connecting the capacity-oriented batteries 1 in series by using an impedance limitation circuit.

### -Embodiment 3-

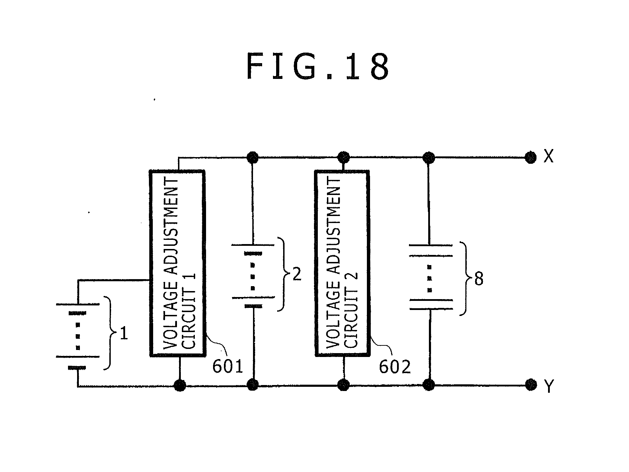

A third embodiment of the present invention is described with reference to FIG. 18.

In the present embodiment, a battery group constructed by electrically connecting capacity-oriented batteries 1 in series and another battery group constructed by electrically connecting instantaneous type batteries 2 in series are electrically connected in parallel to form a further battery group. A capacitive element group is electrically connected in parallel to the further battery group. The capacitive element group is constructed by electrically connecting capacitive passive elements 8 such as electric double layer capacitors and lithium ion capacitors in series. A voltage adjustment circuit 601 is electrically connected between the battery group constructed by electrically connecting the capacity-oriented batteries 1 in series and the battery group constructed by electrically connecting the instantaneous type batteries 2 in series. Another voltage adjustment circuit 602 is electrically connected between the battery group constructed by electrically connecting the instantaneous type batteries 2 in series and the capacitive element group constructed by electrically connecting the capacitive passive elements 8 such as electric double layer capacitors and lithium ion capacitors in series. The capacitive element group constructed by electrically connecting the capacitive passive elements 8 such as electric double layer capacitors and lithium ion capacitors in series is capable of instantaneously receiving high current in spite of the low capacitance capacitive element group possesses. It is to be noted that the voltage adjustment circuits 601 and 602 are comprised of the step-up/down chopper shown in FIG. 1. The voltage adjustment circuits 601 and 602 function as a current controlling circuit to inhibit a current of a level higher than a prescribed value from flowing to the capacity-oriented batteries 1 and the instantaneous type batteries 2.

A case is studied here in which a load is electrically connected to the system which is consisted in such a manner as described above, and then the system carries out charging and discharging.

The first case is when the current is comparatively low.

The DUTY ratio of the switches of the voltage adjustment circuits 601 and 602 is adjusted so that a current is supplied to the battery group constructed by electrically connecting the capacity-oriented batteries 1 in series, battery group constructed by electrically connecting the instantaneous type batteries 2 in series and capacitive element group constructed by electrically connecting the capacitive passive elements 8 such as electric double layer capacitors and lithium ion capacitors in series in accordance with a ratio corresponding to the capacitance ratio among these three groups. By supplying the current, the capacities of the battery group constructed by electrically connecting the capacity-oriented batteries 1 in series, battery group constructed by electrically connecting the instantaneous type batteries 2 in series and capacitive element group constructed by electrically connecting the capacitive passive elements 8 such as electric double layer capacitors or lithium ion capacitors in series can be used equally.

Another case is studied here in which a current higher than the maximum value of current the capacity-oriented battery is capable of receiving flows thereto.

In this case, the DUTY ratio of the switches of the voltage adjustment circuit 601 is increased. As a result, only the current flowing to the battery group constructed by electrically connecting the capacity-oriented batteries 1 in series decreases. Meanwhile, the current flowing to the battery group constructed by electrically connecting the instantaneous type batteries 2 in series and to the capacitive element group constructed by electrically connecting the capacitive passive elements 8 such as electric double layer capacitors and lithium ion capacitors in series increases.

Another case is when current higher than the maximum value of current the instantaneous type battery is capable of receiving flows thereto.

In this case, the DUTY ratio of the switches of the voltage adjustment circuit 602 is adjusted. As a result, only the current flowing to the capacitive element group constructed by electrically connecting the capacitive passive elements 8 such as electric double layer capacitors and lithium ion capacitors in series increases. Meanwhile, the current flowing to the battery group constructed by electrically connecting the capacity-oriented batteries 1 in series and to the battery group constructed by electrically connecting the instantaneous type batteries 2 in series decreases.

From the results described above, in the present embodiment, when the current is low the current can be supplied equally to the battery group constructed by electrically connecting the capacity-oriented batteries 1 in series, battery group constructed by electrically connecting the instantaneous-type batteries 2 in series, and capacitive element group constructed by electrically connecting the capacitive passive elements 8 such as electric double layer capacitors and lithium ion capacitors in series. On the other hand, when a high current is required, the high current can be supplied to the capacitive element group constructed by electrically connecting the capacitive passive elements 8 such as electric double layer capacitors or lithium ion capacitors in series.

### -Embodiment 4-

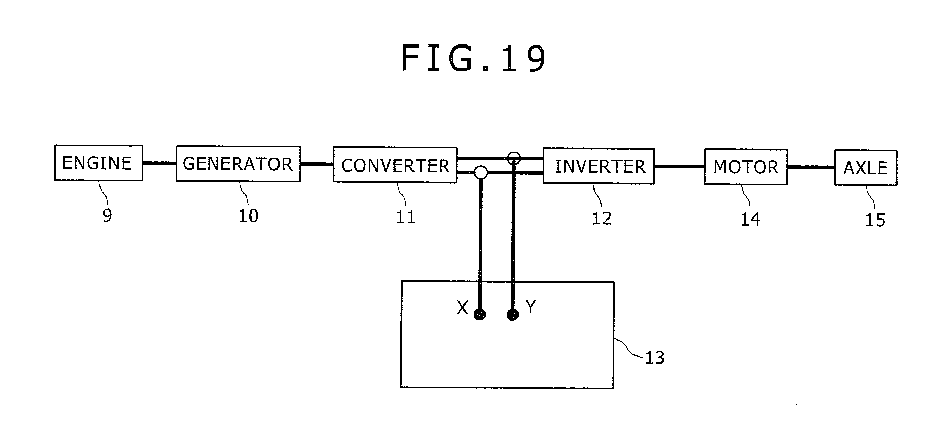

A fourth embodiment of the present invention is described with reference to FIG. 19.

In the present embodiment, the systems of the embodiments 1 to 3 are applied as a power supply for a vehicle.

The configuration described below can be applied to a power supply not only of a hybrid vehicle but also of general electric cars and various apparatus other than electric cars. In this case, it is a matter of course that the hybrid vehicle includes not only an automobile but also such vehicles as railway vehicles and buses.

FIG. 19 shows a configuration of a hybrid vehicle to which the system of any one of the embodiments 1 to 3 is applied as a driving power supply.

In the present embodiment, a hybrid vehicle which utilizes a series hybrid system is taken as an example and is described. As the hybrid system, a parallel system, a series system, and a system which is a combination of the parallel system and the series system are available. The configuration of the present embodiment described below can be applied to the power supply of all of the systems mentioned.

As shown in FIG. 19, reference numeral 9 denotes an engine, 10 denotes a generator, 11 denotes a converter, 12 denotes an inverter, 13 denotes a battery system, 14 denotes a motor, and 15 denotes an axle. In the figure, the X point and the Y point correspond to the X point and the Y point of the battery system described in the embodiments 1 to 3, respectively. In the series hybrid system, the generator 10 is driven by the engine 9 to generate electric power. The electric power is supplied to the motor 14 through the converter 11 and the inverter 12. The motor 14 uses the electric power obtained from the engine 9 and electric power obtained from the battery system 13 in order to transmit motive power to the axle 15. The current controlling circuit of any one of the embodiments 1 to 3 is provided in the battery system 13.

To the battery system 13, a low current flows when moderate acceleration or deceleration is carried out, but high current flows upon sudden acceleration or deceleration. Therefore, in the present embodiment, efficient operation can be carried out by using a current controlling circuit of any one of the embodiments 1 to 3. When the current is comparatively low, the battery system 13 charges and discharges in accordance with a capacity ratio between the battery group constructed by electrically connecting the capacity-oriented batteries 1 in series and the battery group constructed by electrically connecting the instantaneous type batteries 2. When the current is comparatively high, the battery system 13 charges and discharges in accordance with a capacity ratio between the battery group constructed by electrically connecting the capacity-oriented batteries 1 in series, battery group constructed by electrically connecting the instantaneous type batteries 2 in series, and capacitive element group constructed by electrically connecting the capacitive passive elements 8 such as electric double layer capacitors or lithium ion capacitors in series. When the current is high the battery system 13 supplies current only to the battery group constructed by electrically connecting the instantaneous type batteries 2 in series, or the capacitive element group constructed by electrically connecting the capacitive passive elements 8 such as electric double layer capacitors and lithium ion capacitors in series.

According to the various embodiments described above, the capacity-oriented batteries and the instantaneous type batteries are provided in a mixed manner and are electrically connected in parallel. Thus, operation of the current controlling circuit is controlled to inhibit current of a level higher than a prescribed value from flowing to the capacity-orientated battery.

As a current controlling circuit, a voltage adjustment circuit may be provided. The current can be supplied efficiently to the capacity-oriented batteries and the instantaneous type batteries by providing a voltage adjustment circuit between the two different types of batteries and controlling changeover of switches which the voltage adjustment circuit includes. As the voltage adjustment circuit, any one of a step-up chopper, a step-down chopper, or a step-up/down chopper may be used. Where a step-up chopper or a step-down chopper is used, it is necessary for the chopper to normally have a potential difference from either of the capacity-oriented batteries or the instantaneous type batteries.

As the current controlling circuit, an impedance adjustment element may be provided. The impedance adjustment element is preferably a coil.

While the various embodiments and modifications are described above, the present invention is not limited to the contents of them. Also other forms which may be considered within the scope of the technical idea of the present invention are included within the scope of the present invention.

The disclosed contents of the following priority basic application are incorporated herein by reference: Japanese Patent Application No. 123030 of 2011 (filed on June 1, 2011).

## Claims

1. An electric storage system comprising at least two types of electric storage cells,
wherein a first electric storage unit is configured from a first electric storage cell of the two types of electric storage cells, and
a second electric storage unit is configured from a second electric storage cell of the two types of electric storage cells,
the first and second electric storage units being electrically connected to each other through a current controlling circuit.

2. An electric storage system comprising at least three types of electric storage cells,
wherein a first electric storage unit is configured from a first electric storage cell of the three types of electric storage cells,
a second electric storage unit is configured from a second electric storage cell of the three types of electric storage cells, and
a third electric storage unit is configured from a third electric storage cell of the three types of electric storage cells,
the first and second electric storage units being electrically connected to each other through a first current controlling circuit, the second and third electric storage units being electrically connected to each other through a second current controlling circuit.

3. The electric storage system according to claim 1 or 2, wherein the current controlling circuit comprises a voltage adjustment circuit, the voltage adjustment circuit including one of either a step-up chopper, a step-down chopper, a step-up/down chopper, or a combination of a step-up chopper and a step-down chopper.

4. The electric storage system according to claim 1 or 2, wherein the current controlling circuit comprises an impedance adjustment circuit.

5. The electric storage system according to claim 4, wherein the impedance adjustment circuit is a coil.

6. An electric storage system, comprising:
a first electric storage unit configured from a first electric storage cell;
a second electric storage unit configured from a second electric storage cell different in type from the first electric storage cell; and
a current controlling circuit provided between the first electric storage unit and the second electric storage unit, the current controlling circuit being electrically connected to the first and second electric storage units to control input/output current amounts to and from the first electric storage unit and the second electric storage unit;
wherein the current controlling circuit includes two switch circuits and allows the two switch circuits to provide switching control between on and off states to control the ratio of the input/output current amounts to and from the first electric storage unit and the second electric storage unit.
